# EUROPEAN PATENT APPLICATION

(11) **EP 4 489 193 A1**
(43) Date of publication of application: **08.01.2025**
(21) Application number: 23183761.8
(22) Date of filing: 06.07.2023
(51) Int. Cl.: H01M 50/204, H01M 50/242, H01M 50/244, H01M 50/249, H01M 50/256, H01M 50/262, H01M 50/291, H01M 50/293, H01M 10/04

(54) **AN ENERGY STORAGE ASSEMBLY**

(71) Applicant: VOLVO TRUCK CORPORATION, 405 08 Göteborg (SE)
(72) Inventor: Rout, Dhirendra, 422 54 Göteborg (SE); Ghosh, Pramathesh, 417 26 Göteborg (SE); Arnesson, Simon, 475 32 Öckerö (SE)
(74) Representative: Valea AB

(57) **Abstract**

The present disclosure relates to an energy storage assembly (10). The energy storage assembly (10) comprising a housing (12) adapted to accommodate a first energy storage module (14). The first energy storage module (14) comprises at least one battery cell (18).

The energy storage assembly (10) comprises a first housing side wall (20). A first housing support bracket (22) extends from the first housing side wall (20) and a second housing support bracket (24) extends from the first housing side wall (20).

At least a portion of the first energy storage module (14) is arranged to be located between the first housing support bracket (22) and the second housing support bracket (24).

The energy storage assembly (10) further comprises a first tolerance adjustment member (26) adapted to be located between the second housing support bracket (24) and the at least a portion of the first energy storage module (14).

## Description

### TECHNICAL FIELD

The disclosure relates generally to energy storage assemblies. In particular aspects, the disclosure relates to an energy storage assembly comprising a housing and a first energy storage module. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electric vehicle, such as an electric heavy-duty vehicle, may comprise an energy storage assembly for storing electric energy to be used by one or more consumers of electric power, such as one or more electric motors for propulsion of the electric vehicle. Purely by way of example, such an energy storage assembly may comprise a housing and a first energy storage module wherein the first energy storage module may comprise at least one battery cell. The housing accommodates the first energy storage module. It may be desired to have a relatively large volume of the first energy storage module available for the at least one battery cell.

### SUMMARY

According to a first aspect of the disclosure, there is provided an energy storage assembly. The energy storage assembly comprises a housing adapted to accommodate a first energy storage module. The first energy storage module comprises at least one battery cell. The energy storage assembly comprises a first housing side wall. A first housing support bracket extends from the first housing side wall and a second housing support bracket extends from the first housing side wall. At least a portion of the first energy storage module is arranged to be located between the first housing support bracket and the second housing support bracket. The energy storage assembly further comprises a first tolerance adjustment member adapted to be located between the second housing support bracket and the at least a portion of the first energy storage module. The first tolerance adjustment member has at least two configurations with different extensions in a direction from the second housing support bracket to the at least a portion of the first energy storage module and/or to the first housing support bracket. A technical benefit may include that the first energy storage module is appropriately supported by the first and second supporting brackets which may result in that vibrations, accelerations or other undesired movements of the first energy storage module may be kept appropriately low. This in turn implies a reduced need for reinforcements or the like of the first energy storage module which may result in a relatively large volume of the first energy storage module being available for accommodating the at least one battery cell.

Optionally in some examples, including in at least one preferred example, the first energy storage module extends in a first direction along a first axis, a second direction along a second axis and a third direction along a third axis, wherein the second housing support bracket is located at a bracket distance from the first housing support bracket, as seen along the third axis, wherein the extension of the energy storage module along each one of the first axis and the second axis is larger than the extension of the energy storage module along the third axis. A technical benefit may include that the undesired movements along the third axis may be kept appropriately low.

Optionally in some examples, including in at least one preferred example, the first energy storage module has a first energy storage module length along the first axis, wherein each one of the first housing support bracket and the second housing support bracket extends along the first axis over at least 50% of the first energy storage module length. A technical benefit may include that the first energy storage module is supported along a relatively large distance along the first axis.

Optionally in some examples, including in at least one preferred example, the first tolerance adjustment member extends along the first axis over at least 50% of the first energy storage module length. A technical benefit may include that the undesired movements along the third axis may be kept appropriately low due to the relatively large extension of the first tolerance adjustment member.

Optionally in some examples, including in at least one preferred example, the first tolerance adjustment member is attached to the first housing side wall by means of threaded members and/or rivets. A technical benefit may include a cost-effective attachment of the first tolerance adjustment member.

Optionally in some examples, including in at least one preferred example, the first tolerance adjustment member comprises a first tolerance adjustment member flange and a second tolerance adjustment member flange, the first tolerance adjustment member flange and the second tolerance adjustment member flange being located at a distance from each other along the third axis. A technical benefit may include that the first tolerance adjustment member may be appropriately stiff along at least the third axis.

Optionally in some examples, including in at least one preferred example, the first tolerance adjustment member comprises a flexible element, preferably a rubber element. The first tolerance adjustment member further comprises a load applicator extending at least partially along the first axis. The load applicator is adapted to apply compression to the flexible element whereby the extension of the flexible element along the third axis can be altered. A technical benefit may include that the different extensions in a direction from the second housing support bracket to at least a portion of the first energy storage module may be achieved in a straightforward manner.

Optionally in some examples, including in at least one preferred example, the load applicator extends at least partially through the flexible element. A technical benefit may include that a relatively compact first tolerance adjustment member may be obtained.

Optionally in some examples, including in at least one preferred example, the load applicator comprises a first abutment member and a second abutment member being located on opposite sides of the flexible element as seen along the first axis. The first abutment member and the second abutment member are connected to each other via a load applicator connector such that a distance along the first axis between the first abutment member and the second abutment member is variable by rotating at least one of the first abutment member, the second abutment member and the load applicator connector relative to at least another one of the first abutment member, the second abutment member and the load applicator connector. A technical benefit may include that the different extensions in a direction from a second housing support bracket to at least a portion of the first energy storage module may be achieved in a straightforward manner.

Optionally in some examples, including in at least one preferred example, the first abutment member and the load applicator connector form a unitary component.

Optionally in some examples, including in at least one preferred example, the first abutment member and the load applicator connector form a bolt wherein the first abutment member forms a bolthead of the bolt. The second abutment member comprises a nut.

Optionally in some examples, including in at least one preferred example, the first tolerance adjustment member comprises a covering member at least partially covering the flexible element, the covering member being made of a plastics material. A technical benefit may include that the covering member may make the first tolerance adjustment member relatively robust towards the first energy storage module.

Optionally in some examples, including in at least one preferred example, the housing is adapted to accommodate a second energy storage module. The second energy storage module comprises at least one battery cell. The energy storage assembly comprises a third housing support bracket extending from the first housing side wall. At least a portion of the second energy storage module is arranged to be located between the second housing support bracket and the third housing support bracket. The energy storage assembly further comprises a second tolerance adjustment member adapted to be located between the third housing support bracket and the at least a portion of the second energy storage module. The second tolerance adjustment member has at least two configurations with different extensions in a direction from the third housing support bracket to the at least a portion of the second energy storage module and/or to the second housing support bracket. A technical benefit may include that an energy storage assembly with the capacity to store a relatively large amount of energy may be obtained.

Optionally in some examples, including in at least one preferred example, features of the second tolerance adjustment member are the same as the features of the first tolerance adjustment member. A technical benefit may include that the undesired movements along the third axis may be kept appropriately low.

Optionally in some examples, including in at least one preferred example, the energy storage assembly comprises the first energy storage module. The housing accommodates the first energy storage module.

Optionally in some examples, including in at least one preferred example, the energy storage assembly comprises the second energy storage module. The housing accommodates the second energy storage module.

According to a second aspect of the disclosure, there is provided a vehicle comprising the energy storage assembly according to the first aspect of the present disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a cross-sectional side view of an energy storage assembly according to an example.
**FIG. 2** is a cross-sectional side view of an energy storage assembly according to an example.
**FIG. 3** is a perspective view of an energy storage assembly according to an example.
**FIG. 4A** - **4** **B** illustrate an energy storage assembly according to an example.
**FIG.** 5 illustrates a portion of an energy storage assembly according to an example.

### DETAILED DESCRIPTION

The detailed description set forth below provides information and examples of the disclosed technology with sufficient detail to enable those skilled in the art to practice the disclosure.

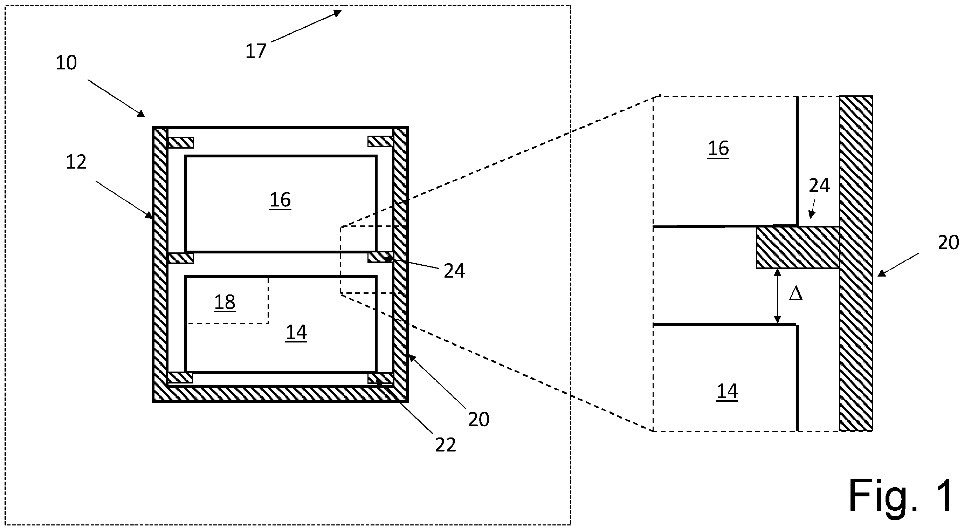

**FIG. 1** is a cross-sectional side view of an energy storage assembly 10. The energy storage assembly 10 comprises a housing 12 adapted to accommodate a first energy storage module 14. In the FIG. 1 example, the energy storage assembly 10 comprises the first energy storage module 14 and the housing accommodates the first energy storage module 14. In fact, the **FIG. 1** energy storage assembly 10 is adapted to accommodate a second energy storage module 16 as will be discussed further hereinbelow. Purely by way of example, the energy storage assembly 10 may be adapted to be located in or on a vehicle 17. As a non-limiting example, the vehicle 17 may be a truck. As another example, the energy storage assembly 10 may be adapted to be located in or on a marine vessel (not shown), such as a boat or a ship. As a non-limiting example, the housing 12 may be made of metal, such as aluminium.

The first energy storage module 14 comprises at least one battery cell 18. However, it is also envisaged that the first energy storage module 14 may comprise a plurality of battery cells (not shown). The housing 12 is adapted to accommodate the first energy storage module 14 and in the **FIG. 1** example, the housing 12 accommodates the first energy storage module 14. The energy storage assembly comprises a first housing side wall 20. A first housing support bracket 22 extends from the first housing side wall 20 and a second housing support bracket 24 extends from the first housing side wall 20. Optionally, and as indicated in the **FIG. 1** example, each one of the first housing support bracket 22 and the second housing support bracket 24 extends from the first housing side wall 20 in a direction towards the interior of the housing 12. Moreover, as indicated in **FIG. 1****,** at least a portion of the first energy storage module 14 is arranged to be located between the first housing support bracket 22 and the second housing support bracket 24. In the **FIG. 1** example, at least a portion of the first energy storage module 14 is located between the first housing support bracket 22 and the second housing support bracket 24. As may be realized from **FIG. 1****,** when the first energy storage module 14 is at least partially inserted between the first housing support bracket 22 and the second housing support bracket 24, there may be a play Δ between the first energy storage module 14 and at least one of the first and second housing support brackets 22, 24. Such a play Δ may for instance result in undesired movements of the first energy storage module 14 which in turn may require that the first energy storage module 14 needs to be reinforced in order to be able to accommodate loads that may be occasioned by such movements.

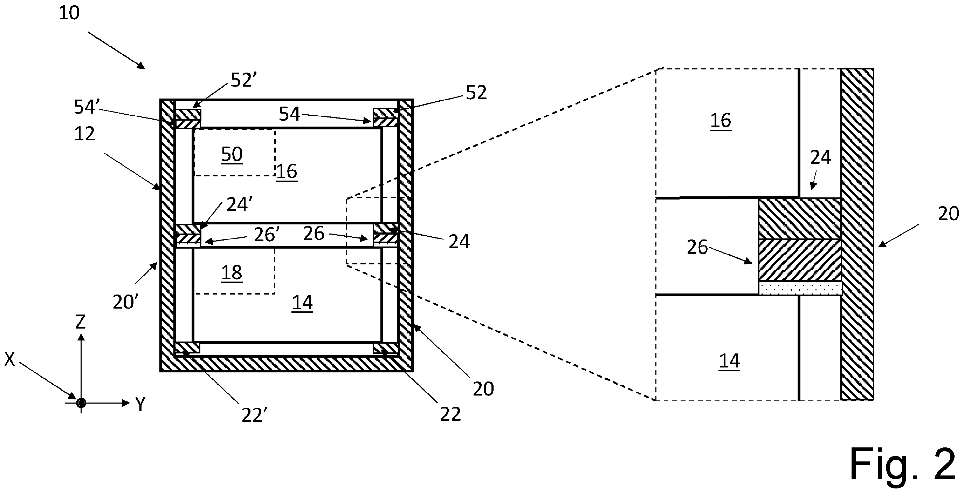

**FIG. 2** illustrates a cross-sectional side view of an energy storage assembly 10 which assembly has features in common with the **FIG. 1** energy storage assembly 10. However, as may be gleaned from **FIG. 2****,** the energy storage assembly 10 disclosed therein further comprises a first tolerance adjustment member 26 adapted to be located between the second housing support bracket 24 and at least a portion of the first energy storage module 14. In the **FIG. 2** example, first tolerance adjustment member 26 is located between the second housing support bracket 24 and at least a portion of the first energy storage module 14. Moreover, as indicated in **FIG. 2****,** the first tolerance adjustment member 26 has at least two configurations with different extensions in a direction from the second housing support bracket 24 to at least a portion of the first energy storage module 14 and/or to the first housing support bracket 22.

To this end, a first configuration of the first tolerance adjustment member 26 is indicated by a hatched area in **FIG. 2** and a second configuration of the first tolerance adjustment member 26 is indicated by the combination of the hatched area and a dotted area. As may be gleaned from **FIG. 2****,** when the first tolerance adjustment member 26 is in the second configuration illustrated in **FIG. 2****,** the first tolerance adjustment member 26 bridges a possible play between the second housing support bracket 24 and at least a portion of the first energy storage module 14. As such, when the first tolerance adjustment member 26 is in the second configuration, the first energy storage module 14 may be appropriately supported by the first and second supporting brackets 22, 24 which may result in that vibrations, accelerations or other undesired movements of the first energy storage module 14 may be kept appropriately low.

Moreover, as indicated in **FIG. 2****,** the first tolerance adjustment member 26 may be adapted to abut each one of the second housing support bracket 24 and at least a portion of the first energy storage module 14 and this applies to any example of the present disclosure. However, it is also contemplated that other examples of the energy storage assembly 10 may comprise an intermediate member (not shown) located between the second housing support bracket 24 and the first tolerance adjustment member 26 and/or between the first tolerance adjustment member 26 and at least a portion of the first energy storage module 14.

As a non-limiting example, in the **FIG. 2** example, each one of the first housing support bracket 22 and the second housing support bracket 24 may be fixedly attached to the first housing side wall 20, for instance by means of at least one of a weld joint (not shown), a bolt joint (not shown) or the like. As a non-limiting example, the first energy storage module 14 may be supported by the first housing support bracket 22 when the first energy storage module 14 is inserted into the housing 12.

Moreover, although the present disclosure puts emphasis on the first housing side wall 20 for the sake of brevity, it should be noted that examples of the energy storage assembly 10 may also comprise a second housing side wall 20' which for instance may be located on the opposite side of the first energy storage module 14 as compared to the first housing side wall 20. To this end, reference is made to **FIG. 2****,** exemplifying that such a second housing side wall 20' may have the same features as the first housing side wall 20, for instance as regards the first housing support bracket 22', the second housing support bracket 24' and the first tolerance adjustment member 26'.

Purely by way of example, as indicated in **FIG. 2****,** the first energy storage module 14 may extend in a first direction along a first axis X, a second direction along a second axis Y and a third direction along a third axis Z. The second housing support bracket 24 is located at a bracket distance from the first housing support bracket 22, as seen along the third axis Z. Moreover, the extension of the energy storage module 14 along each one of the first axis X and the second axis Y is larger than the extension of the energy storage module along the third axis Z.

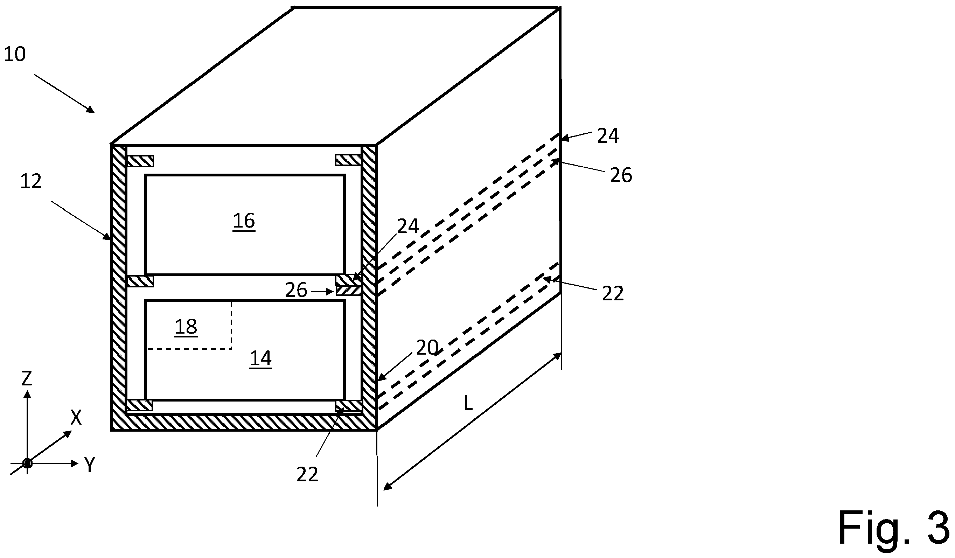

Purely by way of example, as indicated in FIG. 3, the first energy storage module 14 has a first energy storage module length L along the first axis X. Moreover, as indicated by the dashed lines in **FIG. 3****,** each one of the first housing support bracket 22 and the second housing support bracket 24 extends along the first axis X over at least 50%, optionally over at least 70%, of the first energy storage module length L. Moreover, though again purely by way of example, the first tolerance adjustment member 26 may extend along the first axis X over at least 50%, optionally over at least 70%, of the first energy storage module length L. In the **FIG. 3** example, each one of the first housing support bracket 22, the second housing support bracket 24 and the first tolerance adjustment member 26 extends substantially over the whole of the first energy storage module length L.

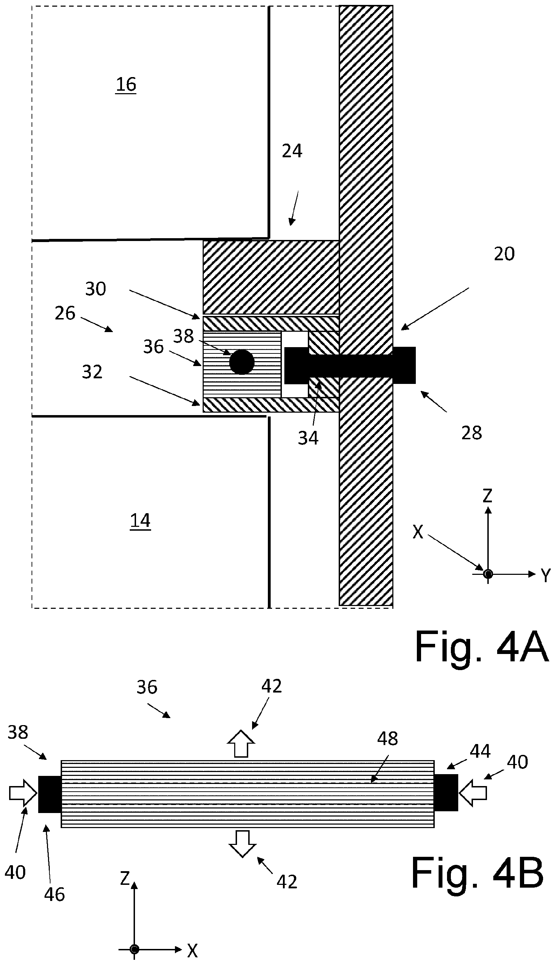

**FIG. 4A** illustrates an example of the first tolerance adjustment member 26. As may be realized from the **FIG. 4A** the first tolerance adjustment member 26 may be attached to the first housing side wall 20 by means of threaded members, such as bolts and/or rivets. Although the **FIG. 4A** example illustrates a single threaded member or rivet 28, it is envisaged that the first tolerance adjustment member 26 may be attached to the first housing side wall 20 by means of a plurality of threaded members or rivets 28 which for instance may be distributed along the longitudinal axis X.

Moreover, again with reference to **FIG. 4A****,** the first tolerance adjustment member 26 may comprise a first tolerance adjustment member flange 30 and a second tolerance adjustment member flange 32. The first tolerance adjustment member flange 30 and a second tolerance adjustment member flange 32 may be located at a distance from each other along the third axis Z. Furthermore, and as exemplified in **FIG. 4A****,** the first tolerance adjustment member flange 30 and the second tolerance adjustment member flange 32 may be connected to each other via a tolerance adjustment member web 34. Purely by way of example, the first tolerance adjustment member flange 30, the second tolerance adjustment member flange 32 and the tolerance adjustment member web 34 may form a unitary component. Purely by way of example, such a unitary component may be made of a plastics material. Moreover, the unitary component formed by the first tolerance adjustment member flange 30, the second tolerance adjustment member flange 32 and the tolerance adjustment member web 34 may be referred to as a beam or a bracket.

Furthermore, as indicated in **FIG. 4A****,** the first tolerance adjustment member 26 may comprise a flexible element 36. Purely by way of example, the flexible element 36 may be made of rubber. As a non-limiting example, the flexible element 36 may be located at least partially between the first tolerance adjustment member flange 30 and the second tolerance adjustment member flange 32. Moreover, the first tolerance adjustment member 26 may further comprise a load applicator 38 extending at least partially along the first axis X. Moreover, in the **FIG. 4A** example, the load applicator 38 extends at least partially through the flexible element 36. The load applicator 38 is adapted to apply compression to the flexible element 36 whereby the extension of the flexible element 36 along the third axis Z can be altered. To this end, reference is made to **FIG. 4B** which illustrates the **FIG. 4A** flexible element 36 and load applicator 38 in a view onto a plane extending parallel to the first and third axes X, Z. In **FIG. 4B****,** a first pair of arrows 40 indicates a compression applied to the flexible element 36 by the load applicator 38 along the first axis X and the second pair of arrows 42 indicates an increased extension of the flexible element 36 along the third axis Z which is the result of the applied compression.

As a non-limiting example, and as indicated in **FIG. 4B****,** the load applicator 38 may comprise a first abutment member 44 and a second abutment member 46 being located on opposite sides of the flexible element 36 as seen along the first axis X. The first abutment member 44 and the second abutment member 46 are connected to each other via a load applicator connector 48 such that a distance along the first axis X between the first abutment member 44 and the second abutment member 46 is variable by rotating at least one of the first abutment member 44, the second abutment member 46 and the load applicator connector 48 relative to at least another one of the first abutment member 44, the second abutment member 46 and the load applicator connector 48.

However, it is also envisaged that in other examples, the load applicator 38 may be adapted to be located on only one side of the flexible element 36 as seen along the first axis X. To this end, a first portion of the load applicator 38 may be connected to a portion of the housing 12 and a second portion of the load applicator 38 may be adapted to abut a portion of the flexible element 36 and the load applicator 38 may be adapted to be operated, for instance by means of a threaded member or by a ratchet arrangement (not shown), so as to impart a compressing load onto the flexible element 36 via the second portion of the load applicator 38.

As a non-limiting example, the first abutment member 44 and the load applicator connector 48 may form a unitary component. Purely by way of example, the first abutment member 44 and the load applicator connector 48 may form a bolt wherein the first abutment member 44 forms a bolthead of the bolt. The second abutment member 46 may comprise a nut. In such an example, tools such as wrenches (not shown) or the like may be used for rotating the bolt relative to the nut in order to alter the distance between the first abutment member 44 and the second abutment member 46 to thereby alter the extension of the flexible element 36 along the third axis Z.

For any example of the flexible element 36 and the load applicator 38, there may be an initial gap along the third axis Z between the first tolerance adjustment member 26 and at least one of the energy storage module 14 and the second housing support bracket 24. Purely by way of example, such as initial gap may be present when the energy storage module 14 is inserted between the first housing support bracket 22 and the first tolerance adjustment member 26. The initial gap may be reduced, possibly removed, by applying a compression to the flexible element 36 using the load applicator 38.

As has been intimated above, the first tolerance adjustment member 26 may comprise a covering member 30, 32, 34 at least partially covering the flexible element 36. Purely by way of example, at least one of, preferably each one of, the first tolerance adjustment member flange 30, the second tolerance adjustment member flange 32 and the tolerance adjustment member web 34 may form part of such a covering member. To this end, the covering member may be such that the distance along at least the third axis Z between the first tolerance adjustment member flange 30 and the second tolerance adjustment member flange 32 may be altered when the extension of the flexible element 36 along the third axis Z is altered.

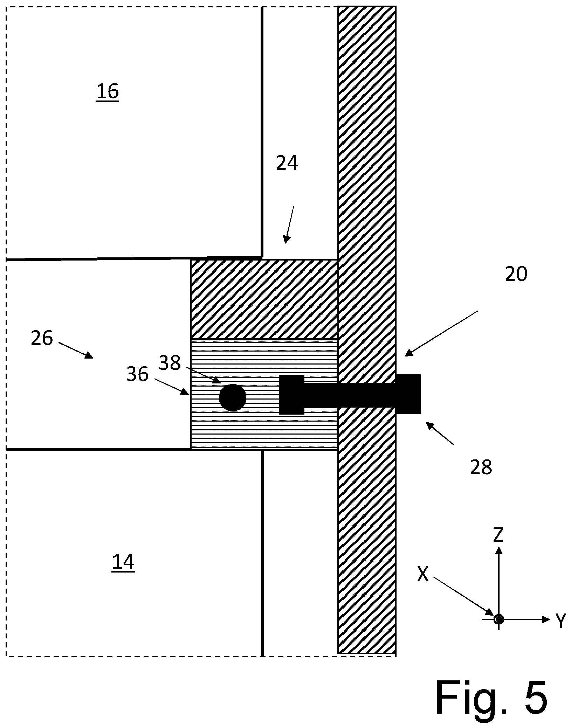

However, as indicated in **FIG. 5****,** it is also envisaged that examples of the first tolerance adjustment member 26 need not comprise a covering member. As such, it is envisaged that in examples of the first tolerance adjustment member 26, the flexible element 36 may be in contact with at least one of the first energy storage module 14 and the second housing support bracket 24.

Reverting to **FIG. 2****,** it should be noted that in examples of the energy storage assembly 10, the housing may be adapted to accommodate a second energy storage module 16. The second energy storage module 16 comprises at least one battery cell 50. In the **FIG. 2** example, the energy storage assembly 10 comprises the second energy storage module 16 and the housing 12 accommodates the second energy storage module 16. Moreover, in the **FIG. 2** example, the energy storage assembly 10 comprises a third housing support bracket 52 extending from the first housing side wall 20. At least a portion of the second energy storage module 16 is arranged to be located between the second housing support bracket 24 and the third housing support bracket 52. In the **FIG. 2** example, at least a portion of the second energy storage module 16 is located between the second housing support bracket 24 and the third housing support bracket 52. The energy storage assembly 10 may further comprise a second tolerance adjustment member 54 adapted to be located between the third housing support bracket 52 and at least a portion of the second energy storage module 16. In the **FIG. 2** example, the second tolerance adjustment member 54 is located between the third housing support bracket 52 and at least a portion of the second energy storage module 16. The second tolerance adjustment member 54 has at least two configurations with different extensions in a direction from the third housing support bracket 52 to the at least a portion of the second energy storage module 16 and/or to the second housing support bracket 24.

Purely by way of example, features of the second tolerance adjustment member 54 may be the same as the features of the first tolerance adjustment member 26.

The present disclosure may be presented by any one of the below examples.

Example 1. An energy storage assembly 10, the energy storage assembly 10 comprising a housing 12 adapted to accommodate a first energy storage module 14, the first energy storage module 14 comprising at least one battery cell 18,
the energy storage assembly 10 comprising a first housing side wall 20, a first housing support bracket 22 extending from the first housing side wall 20 and a second housing support bracket 24 extending from the first housing side wall 20,
at least a portion of the first energy storage module 14 being arranged to be located between the first housing support bracket 22 and the second housing support bracket 24, wherein the energy storage assembly 10 further comprising a first tolerance adjustment member 26 adapted to be located between the second housing support bracket 24 and the at least a portion of the first energy storage module 14,
the first tolerance adjustment member 26 having at least two configurations with different extensions in a direction from the second housing support bracket 24 to the at least a portion of the first energy storage module 14 and/or to the first housing support bracket 22.

Example 2. The energy storage assembly 10 of Example 1, wherein the first energy storage module 14 extends in a first direction along a first axis X, a second direction along a second axis Y and a third direction along a third axis Z, wherein the second housing support bracket 24 is located at a bracket distance from the first housing support bracket 22, as seen along the third axis Z, wherein the extension of the energy storage module along each one of the first axis X and the second axis Y is larger than the extension of the energy storage module along the third axis Z.

Example 3. The energy storage assembly 10 of Example 2, wherein the first energy storage module 14 has a first energy storage module length L along the first axis X, wherein each one of the first housing support bracket 22 and the second housing support bracket 24 extends along the first axis x over at least 50% of the first energy storage module length L.

Example 4. The energy storage assembly 10 of Example 3, wherein the first tolerance adjustment member 26 extends along the first axis X over at least 50% of the first energy storage module length L.

Example 5. The energy storage assembly 10 of any one of the preceding Examples, wherein the first tolerance adjustment member 26 is attached to the first housing side wall 20 by means of threaded members and/or rivets 28.

Example 6. The energy storage assembly 10 of any one of Examples 2-5, wherein the first tolerance adjustment member 26 comprises a first tolerance adjustment member flange 30 and a second tolerance adjustment member flange 32, the first tolerance adjustment member flange 30 and the second tolerance adjustment member flange 32 being located at a distance from each other along the third axis Z.

Example 7. The energy storage assembly 10 of any one of Examples 2-6, wherein the first tolerance adjustment member 26 comprises a flexible element 36, preferably a rubber element, the first tolerance adjustment member 26 further comprising a load applicator 38 extending at least partially along the first axis X, the load applicator 38 being adapted to apply compression to the flexible element 36 whereby the extension of the flexible element 36 along the third axis Z can be altered.

Example 8. The energy storage assembly 10 of Example 7, wherein the load applicator 38 extends at least partially through the flexible element 36.

Example 9. The energy storage assembly 10 of Example 7 or Example 8, wherein the load applicator 38 comprises a first abutment member 44 and a second abutment member 46 being located on opposite sides of the flexible element 36 as seen along the first axis X, the first abutment member 44 and the second abutment member 46 being connected to each other via a load applicator connector 48 such that a distance along the first axis X between the first abutment member 44 and the second abutment member 46 can be varied by rotating at least one of the first abutment member 44, the second abutment member 46 and the load applicator connector 48 relative to at least another one of the first abutment member 44, the second abutment member 46 and the load applicator connector 48.

Example 10. The energy storage assembly 10 of Example 9, wherein the first abutment member 44 and the load applicator connector 48 form a unitary component.

Example 11. The energy storage assembly 10 of Example 10, wherein the first abutment member 44 and the load applicator connector 48 form a bolt wherein the first abutment member 44 forms a bolthead of the bolt, the second abutment member 46 comprising a nut.

Example 12. The energy storage assembly 10 of any one of Examples 7 to Example 11, wherein the first tolerance adjustment member 26 comprises a covering member 30, 32, 34 at least partially covering the flexible element, the covering member 30, 32, 34 being made of a plastics material.

Example 13. The energy storage assembly 10 of any one of the preceding Examples, wherein the housing 12 is adapted to accommodate a second energy storage module 16, the second energy storage module 16 comprising at least one battery cell 50, the energy storage assembly 10 comprising a third housing support bracket 52 extending from the first housing side wall 20, at least a portion of the second energy storage module being arranged to be located between the second housing support bracket 24 and the third housing support bracket 52, wherein the energy storage assembly 10 further comprising a second tolerance adjustment member 54 adapted to be located between the third housing support bracket 52 and the at least a portion of the second energy storage module 16, the second tolerance adjustment member 54 having at least two configurations with different extensions in a direction from the third housing support bracket 52 to the at least a portion of the second energy storage module 16 and/or to the second housing support bracket 24.

Example 14. The energy storage assembly 10 of Example 13, wherein features of the second tolerance adjustment member are the same as the features of the first tolerance adjustment member 26 as recited by any one of Examples 1 - 12.

Example 15. The energy storage assembly 10 of any one of the preceding Examples, wherein the energy storage assembly 10 comprises the first energy storage module 14, the housing 12 accommodating the first energy storage module 14.

Example 16. The energy storage assembly 10 of any one of Examples 13 - 15, wherein the energy storage assembly 10 comprises the second energy storage module 16, the housing 12 accommodating the second energy storage module 16.

Example 17. A vehicle 17 comprising the energy storage assembly 10 according to any of Examples 1-16.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage assembly (10), said energy storage assembly (10) comprising a housing (12) adapted to accommodate a first energy storage module (14), said first energy storage module (14) comprising at least one battery cell (18),
said energy storage assembly (10) comprising a first housing side wall (20), a first housing support bracket (22) extending from said first housing side wall (20) and a second housing support bracket (24) extending from said first housing side wall (20),
at least a portion of said first energy storage module (14) being arranged to be located between said first housing support bracket (22) and said second housing support bracket (24),
wherein said energy storage assembly (10) further comprising a first tolerance adjustment member (26) adapted to be located between said second housing support bracket (24) and said at least a portion of said first energy storage module (14),
said first tolerance adjustment member (26) having at least two configurations with different extensions in a direction from said second housing support bracket (24) to said at least a portion of said first energy storage module (14) and/or to said first housing support bracket (22).

2. The energy storage assembly (10) of claim 1, wherein said first energy storage module (14) extends in a first direction along a first axis (X), a second direction along a second axis (Y) and a third direction along a third axis (Z), wherein said second housing support bracket (24) is located at a bracket distance from said first housing support bracket (22), as seen along said third axis (Z), wherein the extension of said energy storage module along each one of said first axis (X) and said second axis (Y) is larger than the extension of said energy storage module along said third axis (Z).

3. The energy storage assembly (10) of claim 2, wherein said first energy storage module (14) has a first energy storage module length (L) along said first axis (X), wherein each one of said first housing support bracket (22) and said second housing support bracket (24) extends along said first axis (x) over at least 50% of said first energy storage module length (L).

4. The energy storage assembly (10) of claim 3, wherein said first tolerance adjustment member (26) extends along said first axis (X) over at least 50% of said first energy storage module length (L).

5. The energy storage assembly (10) of any one of the preceding claims, wherein said first tolerance adjustment member (26) is attached to said first housing side wall (20) by means of threaded members and/or rivets (28).

6. The energy storage assembly (10) of any one of claims 2-5, wherein said first tolerance adjustment member (26) comprises a first tolerance adjustment member flange (30) and a second tolerance adjustment member flange (32), said first tolerance adjustment member flange (30) and said second tolerance adjustment member flange (32) being located at a distance from each other along said third axis (Z).

7. The energy storage assembly (10) of any one of claims 2-6, wherein said first tolerance adjustment member (26) comprises a flexible element (36), preferably a rubber element, said first tolerance adjustment member (26) further comprising a load applicator (38) extending at least partially along said first axis (X), said load applicator (38) being adapted to apply compression to said flexible element (36) whereby the extension of said flexible element (36) along said third axis (Z) can be altered, preferably said load applicator (38) extends at least partially through said flexible element (36).

8. The energy storage assembly (10) of claim 7, wherein said load applicator (38) comprises a first abutment member (44) and a second abutment member (46) being located on opposite sides of said flexible element (36) as seen along said first axis (X), said first abutment member (44) and said second abutment member (46) being connected to each other via a load applicator connector (48) such that a distance along said first axis (X) between said first abutment member (44) and said second abutment member (46) can be varied by rotating at least one of said first abutment member (44), said second abutment member (46) and said load applicator connector (48) relative to at least another one of said first abutment member (44), said second abutment member (46) and said load applicator connector (48).

9. The energy storage assembly (10) of claim 8, wherein said first abutment member (44) and said load applicator connector (48) form a unitary component, preferably said first abutment member (44) and said load applicator connector (48) form a bolt wherein said first abutment member (44) forms a bolthead of said bolt, said second abutment member (46) comprising a nut.

10. The energy storage assembly (10) of any one of claims 7 to claim 9, wherein said first tolerance adjustment member (26) comprises a covering member (30, 32, 34) at least partially covering said flexible element, said covering member (30, 32, 34) being made of a plastics material.

11. The energy storage assembly (10) of any one of the preceding claims, wherein said housing (12) is adapted to accommodate a second energy storage module (16), said second energy storage module (16) comprising at least one battery cell (50),
said energy storage assembly (10) comprising a third housing support bracket (52) extending from said first housing side wall (20),
at least a portion of said second energy storage module being arranged to be located between said second housing support bracket (24) and said third housing support bracket (52),
wherein said energy storage assembly (10) further comprising a second tolerance adjustment member (54) adapted to be located between said third housing support bracket (52) and said at least a portion of said second energy storage module (16),
said second tolerance adjustment member (54) having at least two configurations with different extensions in a direction from said third housing support bracket (52) to said at least a portion of said second energy storage module (16) and/or to said second housing support bracket (24).

12. The energy storage assembly (10) of claim 11, wherein features of said second tolerance adjustment member are the same as the features of said first tolerance adjustment member (26) as recited by any one of claims 1-10.

13. The energy storage assembly (10) of any one of the preceding claims, wherein said energy storage assembly (10) comprises said first energy storage module (14), said housing (12) accommodating said first energy storage module (14).

14. The energy storage assembly (10) of any one of claims 11 - 13, wherein said energy storage assembly (10) comprises said second energy storage module (16), said housing (12) accommodating said second energy storage module (16).

15. A vehicle (17) comprising the energy storage assembly (10) according to any of claims 1-14.
